# EUROPEAN PATENT SPECIFICATION

(11) **EP 3 376 069 B1**
(45) Date of publication and mention of the grant of the patent: **21.10.2020**
(21) Application number: 16864082.9
(22) Date of filing: 01.11.2016
(51) Int. Cl.: F16H 55/06

(54) **SYNTHETIC RESIN GEAR**
GETRIEBE AUS KUNSTHARZ
ENGRENAGE EN RÉSINE SYNTHÉTIQUE

(30) Priority: 12.11.2015 JP 2015222077
(43) Date of publication of application: 19.09.2018
(73) Proprietor: Musashi Seimitsu Industry Co., Ltd., Aichi 441-8560 (JP)
(72) Inventor: YAGI, Yasunori, Toyohashi-shi Aichi 441-8560 (JP)
(74) Representative: Santi, Filippo
(86) International application number: PCT/JP2016/082444
(87) International publication number: WO 2017/082119

(56) References cited:
- WO-A1-2013/034862
- JP-A- H0 943 813
- JP-A- H1 113 861
- JP-A- H10 278 124
- JP-A- 2008 075 872
- JP-A- 2009 222 219
- JP-U- S5 196 180
- US-A1- 2004 043 100
- US-A1- 2006 053 918

## Description

### TECHNICAL FIELD

The present invention relates to a synthetic resin gear in which a support shaft, a web, a rim and a boss are molded integrally from a synthetic resin.

### BACKGROUND ART

As disclosed in Patent Document 1 and Patent Document 2, a synthetic resin gear has a web that extends in a radial direction from a boss and a rim that continues from an outer periphery of the web and has gear teeth on an outer periphery thereof. When a support shaft that is inserted through a central hole of the boss is supported on a structure, the boss is made to abut against the structure, thus playing a role in ensuring that there is a gap between the structure and the web in an axial direction. US2006/053918A1 and JP-H09-43813A also show known synthetic resin gears.

### RELATED ART DOCUMENTS

### PATENT DOCUMENTS

Patent Document 1: Japanese Patent Application Laid-open No. 2003-28277
Patent Document 2: Japanese Patent No. 4473605

### SUMMARY OF THE INVENTION

### PROBLEMS TO BE SOLVED BY THE INVENTION

If, in order to cut the cost and lighten the weight, the support shaft and the boss are simply integrated using a synthetic resin, since the support shaft, which has a small diameter, and the boss, which has a large diameter, are coaxially connected, the volume of the boss, which in particular has a large diameter, increases due to it incorporating part of the support shaft; because of this, large sink marks occur in the boss when it is cooled after molding, which affects not only the support shaft but also the web, and there is a possibility that all parts of the gear will be distorted.

The present invention has been accomplished in light of the above circumstances, and it is an object thereof to provide a high quality synthetic resin gear that can suppress shape distortion.

### MEANS FOR SOLVING THE PROBLEMS

In order to attain the above object, according to a first aspect of the present invention, there is provided a synthetic resin gear comprising a support shaft that has opposite end parts supported on a structure, a disk-shaped web that extends from an intermediate part of the support shaft in a radial direction, a rim that is connected to an outer periphery of the web and has gear teeth on an outer periphery thereof, and a cylindrical boss that projects from opposite faces of the web and coaxially surrounds the support shaft across a gap from the support shaft, the support shaft, the disk-shaped web, the rim, and the cylindrical boss being molded integrally from a synthetic resin.

According to a second aspect of the present invention, in addition to the first aspect, an annular first rib that extends coaxially with the support shaft at a position spaced from the rim and a plurality of second ribs that extend while curving between the first rib and the boss and provide a connection between the first rib and the boss are projectingly provided integrally with at least one of the faces of the web.

According to a third aspect of the present invention, in addition to the first or second aspect, a hollow part is provided in the support shaft, a thickness of the support shaft being set so as to be equal to or substantially equal to a thickness of the web.

According to a fourth aspect of the present invention, the hollow part is blocked on one end part side of the support shaft, and the one end part of the support shaft is used as a joint part.

### EFFECTS OF THE INVENTION

In accordance with the first aspect, when used, the synthetic resin gear is doubly supported on the structure by the support shaft. In this arrangement, the synthetic resin gear abuts against the structure via the boss, and is positioned in the axial direction with respect to the structure. Here, since the support shaft, the disk-shaped web extending in the radial direction from the intermediate part of the support shaft, the rim connected to the outer periphery of the web and having the gear teeth on its outer periphery, and the cylindrical boss projecting from opposite faces of the web and coaxially surrounding the support shaft across a gap from the support shaft are integrally molded from a synthetic resin, it is possible to make the thickness and the shaft diameter of each part of the support shaft-quipped synthetic resin gear as uniform as possible. That is, due to the boss being cylindrical and being disposed spaced from the support shaft, although the boss has a large diameter, the thickness of each part can be made equally thin, the volume thereof can be decreased, and distortion due to sink marks after molding can therefore be suppressed. On the other hand, due to the support shaft being spaced from the boss, the diameter of each part of the support shaft can be made equal, and this can also contribute to suppression of distortion due to sink marks after molding. A high quality and light weight support shaft-equipped synthetic resin gear can thus be obtained.

In accordance with the second aspect, the first rib and the second rib reinforce the stiffness of the web effectively. Moreover, even when the web expands or shrinks due to a change in the ambient temperature, the curved second rib flexes appropriately, the shape of the rim can be prevented from being distorted, and the accuracy of shape of the gear teeth can be maintained. Therefore, this support shaft-equipped synthetic resin gear can maintain a good meshing state with another gear even when the ambient temperature changes. Furthermore, the annular first rib suppresses distortion of the gear teeth on its outer periphery due to sink marks at the time of molding.

In accordance with the third aspect, since the hollow part is provided in the support shaft, it is possible to further lighten the weight of the support shaft-equipped synthetic resin gear. Furthermore, since the thickness of the support shaft is set so as to be equal to the thickness of the web, the speeds at which the support shaft and the web are cooled after molding are equal to each other, and the influence of sink marks on each other can be prevented, thus further contributing to an improvement in the quality of the support shaft-equipped synthetic resin gear.

In accordance with the fourth aspect, since the hollow part of the support shaft is blocked on one end side of the support shaft, the stiffness of the one end part can be enhanced. Since the one end part of the support shaft, which is reinforced, is the joint part, a drive device, a driven device, etc. can be strongly linked to the joint part.

### BRIEF DESCRIPTION OF DRAWINGS

[FIG. 1] FIG. 1 is a conceptual diagram schematically showing the overall arrangement of a synthetic resin gear related to one embodiment of the present invention. (first embodiment)
[FIG. 2] FIG. 2 is a vertical sectional view of the synthetic resin gear. (first embodiment)
[FIG. 3] FIG. 3 is a perspective view of the synthetic resin gear. (first embodiment)

### EXPLANATION OF REFERENCE NUMERALS AND SYMBOLS

- 11: Synthetic resin gear
- 12: Gear teeth
- 14: Support shaft
- 21: Boss
- 23: Web
- 24: Rim
- 26: Joint part
- 27: First rib
- 28: Second rib

### MODES FOR CARRYING OUT THE INVENTION

One embodiment of the present invention is explained below by reference to the attached drawings.

### FIRST EMBODIMENT

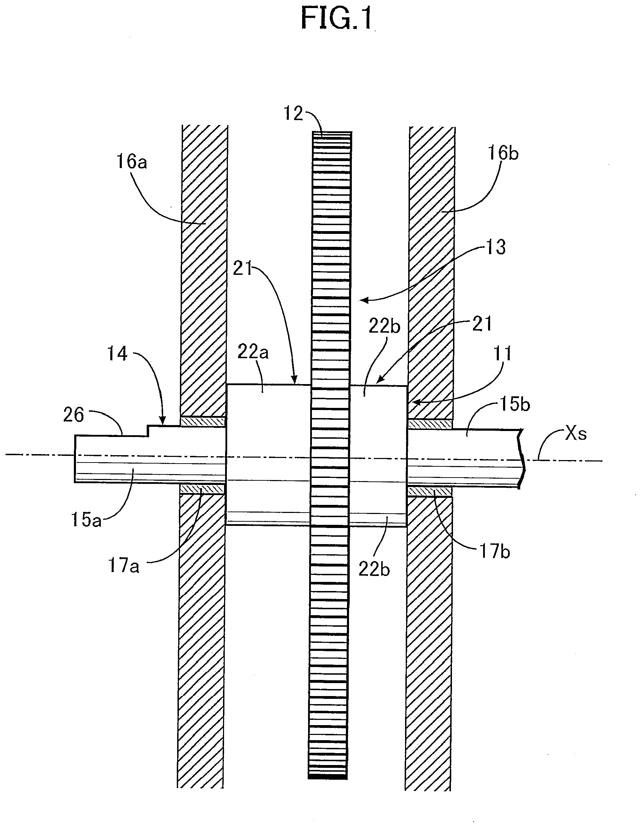

FIG. 1 schematically shows a synthetic resin gear 11 related to one embodiment. The synthetic resin gear 11 includes a gear main body 13 having gear teeth 12 on its outer periphery. The gear main body 13 rotates around a rotational axis Xs. The gear teeth 12 are arranged into an annular shape that is coaxial with the rotational axis Xs. Here, the synthetic resin gear 11 is formed as a spur gear or a helical gear. Therefore, the gear teeth 12 transmit rotation by meshing with another gear. However, the synthetic resin gear 11 may be formed as another type of gear.

A support shaft 14 is integrally joined to the gear main body 13. The support shaft 14 includes a first support shaft portion 15a and a second support shaft portion 15b extending from opposite faces of the gear main body 13 along the rotational axis Xs. The first support shaft portion 15a and the second support shaft portion 15b have an axis that overlaps the rotational axis Xs. The first support shaft portion 15a and the second support shaft portion 15b are individually rotatably supported on structures 16a and 16b. When being supported, the first support shaft portion 15a is received by a first plain bearing 17a fixed to the structure 16a, and the second support shaft portion 15b is received by a second plain bearing 17b fixed to the structure 16b. In this way, the synthetic resin gear 11 is doubly supported so as to be rotatable around the rotational axis Xs.

A boss 21 is integrally joined to the gear main body 13. The boss 21 includes a first boss portion 22a and a second boss portion 22b that extend from opposite faces of the gear main body 13 along the rotational axis Xs. One end of the first boss portion 22a abuts against the structure 16a in the vicinity of the first plain bearing 17a. In this way, on the first plain bearing 17a side a gap is ensured in the axial direction between the structure 16a and the gear main body 13. One end of the second boss portion 22b abuts against the structure 16b in the vicinity of the second plain bearing 17b. In this way, on the second plain bearing 17b side a gap is ensured in the axial direction between the structure 16b and the gear main body 13.

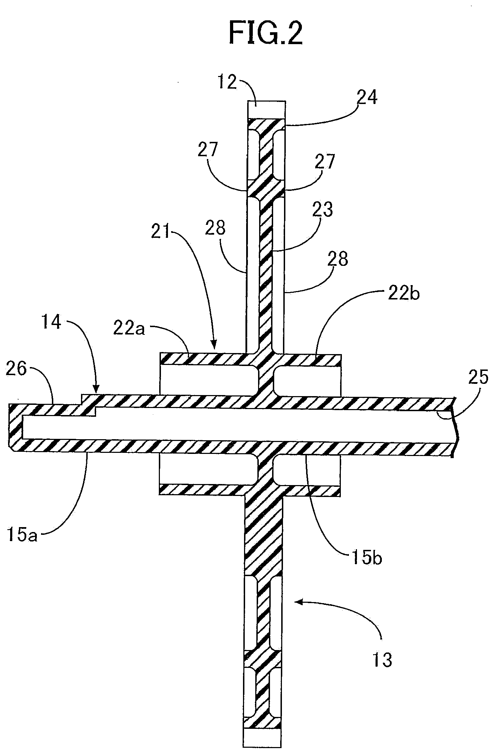

As shown in FIG. 2, the gear main body 13 includes a disk-shaped web 23 that extends in the radial direction from the support shaft 14. The first support shaft portion 15a and the second support shaft portion 15b project from opposite faces of the web 23 in opposite directions from each other. In this way, the web 23 is disposed on an intermediate part of the support shaft 14. A rim 24 having outward-facing gear teeth 12 continues from the outer periphery of the web 23.

The first boss portion 22a and the second boss portion 22b individually project from opposite faces of the web 23. The first boss portion 22a is formed into a cylindrical shape coaxially surrounding the first support shaft portion 15a across a gap from the first support shaft portion 15a. The second boss portion 22b is formed into a cylindrical shape coaxially surrounding the second support shaft portion 15b across a gap from the second support shaft portion 15b. As a result, the web 23 has a uniform plate thickness inside the first boss portion 22a and the second boss portion 22b, and the first support shaft portion 15a and the second support shaft portion 15b can have a uniform diameter. The first boss portion 22a and the second boss portion 22b have a uniform wall thickness. The support shaft 14, the web 23, the rim 24 and the boss 21 are molded integrally from a synthetic resin. As the synthetic resin, for example, polyacetal, nylon, etc. may be used.

The support shaft 14 has a hollow part 25. The thickness of the support shaft 14 is equal to the thickness of the boss 21 and the web 23. Alternatively, the thickness of the support shaft 14 may be set so as to be substantially equal to the thickness of the boss 21 and the web 23. The hollow part 25 is blocked at one end of the support shaft 14. The other end of the hollow part 25 may be open. The blocked end part is provided with a joint part 26. The joint part 26 is cut out of the cylindrical face of the support shaft 14 with a plane that is parallel to the axis of the support shaft 14.

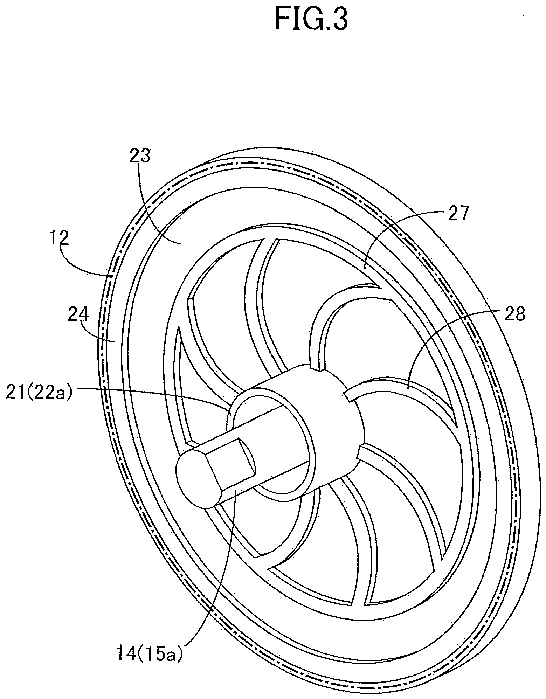

As shown in FIG. 3, an annular first rib 27 and a plurality of second ribs 28 integrally continue from at least one of the faces of the web 23. The first rib 27 extends coaxially with the support shaft 14 at a position spaced from the rim 24 and describes a circle. The individual second ribs 28 provide a connection between the first rib 27 and the boss 21. The second rib 28 extends while curving between the first rib 27 and the boss 21. The first rib 27 and the second rib 28 are continuous with the surface of the web 23 and protrude from the surface of the web 23. In FIG. 3, the first rib 27 and the second rib 28 are formed on one face of the web 23, and a rib may be formed on the opposite face of the web 23 so as to overlap the first rib 27 and the second rib 28.

The synthetic resin gear 11 is doubly supported on the structures 16a and 16b by the support shaft 14. In this arrangement, the synthetic resin gear 11 abuts against the structures 16a and 16b via the boss 21, and is positioned in the axial direction with respect to the structures 16a and 16b. Here, since the support shaft 14, the disk-shaped web 23 extending in the radial direction from the intermediate part of the support shaft 14, the rim 24 connected to the outer periphery of the web 23 and having the gear teeth 12 on its outer periphery, and the cylindrical boss 21 projecting from opposite faces of the web 23 and coaxially surrounding the support shaft 14 across a gap from the support shaft 14 are integrally molded from a synthetic resin, it is possible to make the thickness and the shaft diameter of each part of the support shaft-quipped synthetic resin gear 11 as uniform as possible. That is, due to the boss 21 being cylindrical and being disposed spaced from the support shaft 14, although the boss 21 has a large diameter, the thickness of each part can be made equally thin, the volume thereof can be decreased, and distortion due to sink marks after molding can therefore be suppressed. On the other hand, due to the support shaft 14 being spaced from the boss 21, the diameter of each part of the support shaft 14 can be made equal, and this can also contribute to suppression of distortion due to sink marks after molding. A high quality and light weight support shaft-equipped synthetic resin gear 11 can thus be obtained.

In the synthetic resin gear 11 the first rib 27 and the second rib 28 reinforce the stiffness of the web 23 effectively. Moreover, even when the web 23 expands or shrinks due to a change in the ambient temperature, the curved second rib 28 flexes appropriately, the shape of the rim 24 can be prevented from being distorted, and the accuracy of shape of the gear teeth 12 can be maintained. Therefore, this support shaft-equipped synthetic resin gear 11 can maintain a good meshing state with another gear even when the ambient temperature changes. Furthermore, the annular first rib 27 suppresses distortion of the gear teeth on its outer periphery due to sink marks at the time of molding.

Moreover, since the hollow part 25 is provided in the support shaft 14, it is possible to further lighten the weight of the support shaft-equipped synthetic resin gear 11. Furthermore, since the thickness of the support shaft 14 is set so as to be equal to the thickness of the web 23, the speeds at which the support shaft 14 and the web 23 are cooled after molding are equal to each other, and the influence of sink marks on each other can be prevented, thus further contributing to an improvement in the quality of the support shaft-equipped synthetic resin gear 11.

Moreover, since the hollow part 25 of the support shaft 14 is blocked on one end side of the support shaft 14, the stiffness of the one end part can be enhanced. Since the one end part of the support shaft 14, which is reinforced, is the joint part 26, a drive device, a driven device, etc. can be strongly linked to the joint part 26.

## Claims

1. A synthetic resin gear comprising
a support shaft (14) that has opposite end parts supported on a structure,
a disk-shaped web (23) that extends from an intermediate part of the support shaft (14) in a radial direction,
a rim (24) that is connected to an outer periphery of the web (23) and has gear teeth (12) on an outer periphery thereof, and
a cylindrical boss (21) that projects from opposite faces of the web (23) and coaxially surrounds the support shaft (14) **characterized in that**
the said cylindrical boss (21) coaxially surrounds the support shaft (14) across a gap from the support shaft (14),
the support shaft (14), the disk-shaped web (23), the rim (24), and the cylindrical boss (21) being molded integrally from a synthetic resin.

2. The synthetic resin gear according to Claim 1, wherein an annular first rib (27) that extends coaxially with the support shaft (14) at a position spaced from the rim (24) and a plurality of second ribs (28) that extend while curving between the first rib (27) and the boss (21) and provide a connection between the first rib (27) and the boss (21) are projectingly provided integrally with at least one of the faces of the web (23).

3. The synthetic resin gear according to Claim 1 or 2, wherein a hollow part is provided in the support shaft (14), a thickness of the support shaft (14) being set so as to be equal to or substantially equal to a thickness of the web (23).

4. The synthetic resin gear according to Claim 3, wherein the hollow part is blocked on one end part side of the support shaft (14), and said one end part of the support shaft (14) is used as a joint part (26).

## Patentansprüche

1. Kunstharzzahnrad, umfassend
eine Tragwelle (14), die einander gegenüberliegende Endteile aufweist, die auf einer Struktur getragen werden,
eine scheibenförmige Wange (23), die sich in einer radialen Richtung von einem Zwischenteil der Tragwelle (14) erstreckt,
einen Zahnradkranz (24), der mit einem Außenumfang der Wange (23) verbunden ist und auf einem Außenumfang desselben Zahnradzähne (12) aufweist, und
eine zylindrische Nabe (21), die von einander gegenüberliegenden Seiten der Wange (23) vorspringt und die Tragwelle (14) koaxial umgibt, **dadurch gekennzeichnet, dass**
die zylindrische Nabe (21) die Tragwelle (14) über einen Spalt von der Tragwelle (14) koaxial umgibt,
wobei die Tragwelle (14), die scheibenförmige Wange (23), der Zahnradkranz (24) und die zylindrische Nabe (21) integral aus einem Kunstharz geformt sind.

2. Kunstharzzahnrad nach Anspruch 1, wobei eine ringförmige erste Rippe (27), die sich an einer von dem Zahnradkranz (24) beabstandeten Position koaxial mit der Tragwelle (14) erstreckt, und eine Mehrzahl von zweiten Rippen (28), die sich krümmend zwischen der ersten Rippe (27) und der Nabe (21) erstrecken und eine Verbindung zwischen der ersten Rippe (27) und der Nabe (21) bereitstellen, vorspringend integral mit wenigstens einer der Flächen der Wange (23) bereitgestellt sind.

3. Kunstharzzahnrad nach Anspruch 1 oder 2, wobei ein hohler Teil in der Tragwelle (14) bereitgestellt ist, wobei eine Dicke der Tragwelle (14) so festgelegt ist, dass sie gleich oder im Wesentlichen gleich einer Dicke der Wange (23) ist.

4. Kunstharzzahnrad nach Anspruch 3, wobei der hohle Teil auf einer Endteilseite der Tragwelle (14) verschlossen ist und der eine Endteil der Tragwelle (14) als ein Anschlussteil (26) verwendet wird.

## Revendications

1. Engrenage en résine synthétique comprenant :
un arbre de support (14) qui a des parties d'extrémité opposées supportées sur une structure,
une âme en forme de disque (23) qui s'étend depuis une partie intermédiaire de l'arbre de support (14) dans une direction radiale,
une jante (24) qui est reliée à une périphérie extérieure de l'âme (23) et a des dents d'engrenage (12) sur une périphérie extérieure de celle-ci, et
un bossage cylindrique (21) qui fait saillie depuis des faces opposées de l'âme (23) et entoure coaxialement l'arbre de support (14),
caractérisé en que
ledit bossage cylindrique (21) entoure coaxialement l'arbre de support (14) à travers un espace depuis l'arbre de support (14),
l'arbre de support (14), l'âme en forme de disque (23), la jante (24) et le bossage cylindrique (21) étant moulés d'un seul tenant dans une résine synthétique.

2. Engrenage en résine synthétique selon la revendication 1, dans lequel une première nervure annulaire (27) qui s'étend coaxialement à l'arbre de support (14) à une position espacée de la jante (24) et une pluralité de secondes nervures (28) qui s'étendent en s'incurvant entre la première nervure (27) et le bossage (21) et fournissent une liaison entre la première nervure (27) et le bossage (21) sont fournies en faisant saillie d'un seul tenant avec au moins l'une des faces de l'âme (23).

3. Engrenage en résine synthétique selon la revendication 1 ou 2, dans lequel une partie creuse est prévue dans l'arbre de support (14), une épaisseur de l'arbre de support (14) étant réglée de manière à être égale ou sensiblement égale à une épaisseur de l'âme (23).

4. Engrenage en résine synthétique selon la revendication 3, dans lequel la partie creuse est bloquée sur un côté d'une partie d'extrémité de l'arbre de support (14), et ladite partie d'extrémité de l'arbre de support (14) est utilisée en tant qu'une partie d'articulation (26).
